# EUROPEAN PATENT APPLICATION

(11) **EP 2 495 660 A1**
(43) Date of publication of application: **05.09.2012**
(21) Application number: 09850781.7
(22) Date of filing: 26.10.2009
(51) Int. Cl.: G06F 11/30

(54) **INFORMATION PROCESSING DEVICE AND METHOD FOR CONTROLLING INFORMATION PROCESSING DEVICE**

(71) Applicant: Fujitsu Limited, Kawasaki-shi, Kanagawa 211-8588 (JP)
(72) Inventor: SUZUKI, Yasuo, Kawasaki-shi Kanagawa 211-8588 (JP)
(74) Representative: Holz, Ulrike
(86) International application number: PCT/JP2009/005644
(87) International publication number: WO 2011/051999

(57) **Abstract**

A method for controlling an information processing device which has a processor and a plurality of hardware units. The processor detects abnormality in a hardware unit within the information processing device, obtains identification information relating to the hardware unit having the abnormality, generates abnormality identification information on the basis of the identification information, records the log of an execution process executed by the processor, adds the abnormality identification information to the log of the execution process recorded at the time of detecting the abnormality in the hardware unit, and outputs the log of the execution process to which the abnormality identification information is added.

## Description

### Technical Field

The present invention relates to an information processing apparatus and a method for controlling an information processing apparatus.

### Background Art

A server system includes a plurality of server apparatuses. The server system is desired to have high reliability. The server system includes a server management apparatus for maintaining high reliability. The server management apparatus manages the operation status of the individual server apparatuses included in the server system, and stores fault information and so forth. A server manager performs fault analysis using fault information.

The server management apparatus collectively manages a hardware log and a software log using the following method. If a fault of hardware occurs in a server apparatus, the server management apparatus obtains fault information about the hardware and statistical information about an error from the server apparatus. The server management apparatus stores a history of the fault information about the hardware as a hardware log. The server management apparatus receives a hardware log which is transferred from the server apparatus when a fault occurs. The server management apparatus assigns an error identifier (ID) for identifying an error to the hardware log transferred from the server apparatus. The server management apparatus transmits, to the server manager of the server apparatus in which the fault has occurred, information indicating that an error has occurred together with the error ID. The server manager who has received the error notification obtains a software log, which stores a history of operations of an operating system (OS), an application, or the like at the time of the fault in the server apparatus. After that, the server manager assigns the error ID to the software log, and transfers the software log to the server management apparatus. The server management apparatus manages the software log and hardware log to which the error ID (related to an error) is assigned, and is thus capable of collectively managing the individual logs in the server management apparatus.

However, in the above-described method, the hardware log is associated with the software log, which is a log of an execution process, by the server manager, and an operation error may occur. Further, there is a time lag between the time when the server management apparatus obtains the hardware log and the time when the server management apparatus obtains the software log. Thus, the server manager needs to consider the time lag when analyzing the software log at the time of a fault.

Examples of the related art are as follows.

### Citation List

### Patent Literature

PTL 1: Japanese Laid-open Patent Publication No. 11-119992
PTL 2: Japanese Laid-open Patent Publication No. 2002-215431
PTL 3: Japanese Laid-open Patent Publication No. 2008-059413

### Summary of Invention

### Technical Problem

An object of the present invention is to automatically associate a hardware error with a log of an execution process.

### Solution to Problem

In order to solve the above-described problems, in a method for controlling an information processing apparatus including a processor and a plurality of hardware units, the processor detects an abnormal state of a hardware unit among the plurality of hardware units in the information processing apparatus, obtains identification information of the hardware unit having abnormality, generates abnormality identification information on the basis of the identification information, records a log of an execution process executed by the processor, assigns the abnormality identification information to the log of the execution process recorded at a time when the abnormal state of the hardware unit is detected, and outputs the log of the execution process to which the abnormality identification information has been assigned.

### Advantageous Effects of Invention

According to an aspect to the embodiment, abnormality identification information is assigned to a log of an execution process recorded at the time when an abnormal state of a hardware unit is detected. Accordingly, a hardware error and the log of the execution process can be automatically associated with each other.

### Brief Description of Drawings

[FIG. 1] FIG. 1 is a diagram illustrating a fault information collecting system according to an embodiment.
[FIG. 2] FIG. 2 is a diagram illustrating an example of a hardware log according to an embodiment.
[FIG. 3] FIG. 3 is a diagram illustrating an example of an error ID according to an embodiment.
[FIG. 4] FIG. 4 is a diagram illustrating an example of a software log according to an embodiment.
[FIG. 5] FIG. 5 is a flowchart of a process of an error interrupt handler according to an embodiment.
[FIG. 6] FIG. 6 is a flowchart of a firmware fault process according to an embodiment.
[FIG. 7] FIG. 7 is a flowchart of an error monitoring program according to an embodiment.
[FIG. 8] FIG. 8 is a diagram illustrating an entire fault process.
[FIG. 9] FIG. 9 is a first diagram illustrating an example of a fault information collecting system.
[FIG. 10] FIG. 10 is a second diagram illustrating an example of a fault information collecting system.

### Description of Embodiments

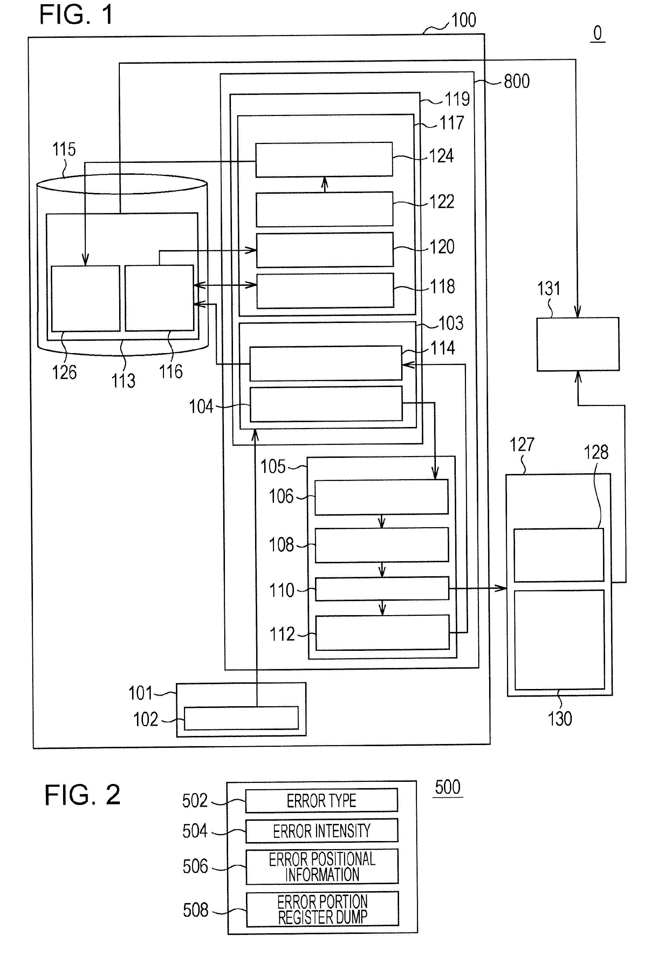

FIG. 1 illustrates a fault information collecting system 0 according to an embodiment. In this embodiment, description will be given using an example in which Linux (registered trademark), which is a standard open source, is applied to an OS of an information processing apparatus.

The fault information collecting system 0 includes an information processing apparatus 100, a system monitoring component 127, and an information support system 131.

The information processing apparatus 100 includes hardware 101, a central processing unit (CPU) 800 serving as a processor, and a hard disc drive (HDD) 115. The CPU 800 executes an operating system (OS) 119 and firmware 105. The OS 119 and the firmware 105 are executed by the CPU 800, thereby having various functions described below.

The hardware 101 includes an error detector 102 that detects a fault or an abnormal state of the hardware 101. Here, "hardware" means internal components that form the information processing apparatus 100, peripheral devices, and the like. The hardware 101 is a hardware unit, such as a network interface card (NIC) serving as an expansion card for connecting the information processing apparatus 100 to an in-house network (local area network (LAN)), for example. The error detector 102 performs interrupt on an error interrupt handler 103 when detecting an error.

The error interrupt handler 103, which is executed at the time of error interrupt, and an error monitoring program 117 are mounted in the OS 119.

The error interrupt handler 103 includes a hardware error detail log inquiry unit 104 and a hardware error detail log storing unit 114. When the error detector 102 detects an error, the hardware error detail log inquiry unit 104 calls a hardware log obtaining unit 106. The hardware error detail log storing unit 114 stores a hardware log in a hardware log storage region 116 in the HDD 115. The hardware log storage region 116 will be described below. A hardware log according to this embodiment is hardware register information indicating the status of the hardware when a fault occurs. The hardware error detail log inquiry unit 104 and the hardware error detail log storing unit 114 are modules.

FIG. 2 illustrates an example of a hardware log. A hardware log 500 includes an error type 502, an error intensity 504, error positional information 506, and an error portion register dump 508. The error type 502 represents the type of error that has occurred. The error intensity 504 represents whether or not an error that has occurred is correctable. The error positional information 506 represents the position where an error has occurred. The error portion register dump 508 is information for specifying the hardware where an error has occurred.

The firmware 105 includes the hardware log obtaining unit 106, an error identifier (ID) creating unit 108, a fault notifying unit 110, and a hardware log notifying unit 112. The firmware is executed by the CPU 800. The hardware log obtaining unit 106, the error ID creating unit 108, the fault notifying unit 110, and the hardware log notifying unit 112 are modules.

The hardware log obtaining unit 106 is called by the error interrupt handler 103. The hardware log obtaining unit 106 obtains and processes a hardware log. The error ID creating unit 108, which is a generating unit for generating abnormality identification information, creates an error ID for identifying an error, and assigns the created error ID to a hardware log. An error ID, which is abnormality identification information, may be created by combining an error occurrence time obtained from a timer that monitors the occurrence time of a hardware error and identification information unique to hardware, such as a MAC address of NIC (media access control address (MACA)), for example. As a result of creating such an error ID, the error ID is not the same as that of any fault log of hardware of the information processing apparatus 100, and log management can be performed in time series in units of server systems. An error ID is assigned to a hardware log, and all the pieces of log information obtained with respect to a fault thereafter are managed using the error ID.

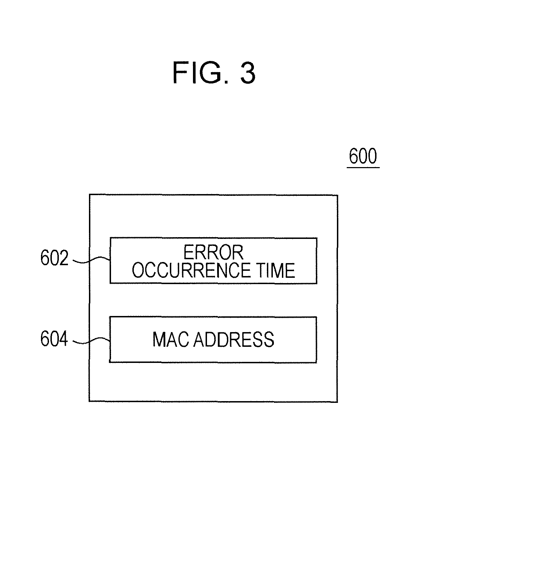

FIG. 3 illustrates an example of an error ID. An error ID 600 includes an error occurrence time 602 and a MAC address 604. The error occurrence time 602 indicates the time when an error occurred. The MAC address 604 is similar to that described above, and thus the description thereof is omitted.

The fault notifying unit 110 notifies the system monitoring component 127 of the occurrence of a fault in order to notify the fault support system 131 that an error has occurred. After the fault notifying unit 110 has performed a notification about a fault, the hardware log notifying unit 112 notifies the hardware error detail log storing unit 114 of a hardware log.

The system monitoring component 127 includes an error information storage unit 128 and an error statistical information storage unit 130. The error information storage unit 128 stores error information supplied from the fault notifying unit 110. The error statistical information storage unit 130 stores distribution information about the types of errors that have occurred.

The HDD 115 includes an error log storage region 113 that stores an error log. The error log storage region 113 includes the hardware log storage region 116 that stores a hardware log and a software log storage region 126 that stores a software log. When obtaining a hardware log from the hardware log notifying unit 112, the hardware error detail log storing unit 114 stores the obtained hardware log in the hardware log storage region 116. A software log according to this embodiment is, for example, a syslog for tracing operations of the OS or application when a fault occurs.

The OS according to this embodiment is capable of recording various events and changes in status that occur in the system. A program executed by the OS according to this embodiment collectively records log information about a plurality of processes. This log is referred to as "system log", or "syslog" in short. A software log is used to trace a malfunction of software or a user operation that has caused a hardware fault.

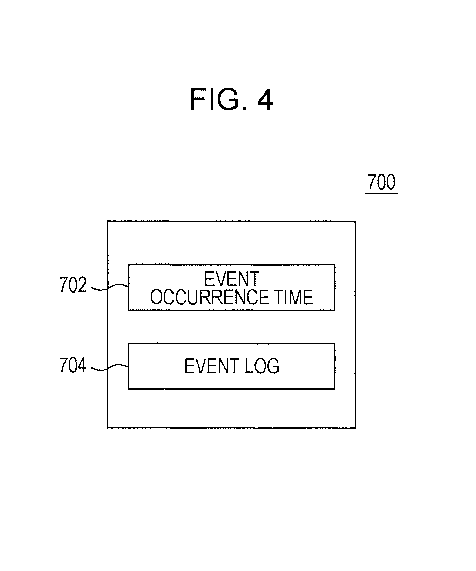

FIG. 4 illustrates an example of a software log. A software log 700 includes an event occurrence time 702 and an event log 704. The event occurrence time 702 indicates the time when an event occurred. The event log 704 is information describing a cause of malfunction of the OS or application.

The error monitoring program 117 includes a hardware log monitoring unit 118, an error ID obtaining unit 120, a software log obtaining unit 122, and a software log storing unit 124. The hardware log monitoring unit 118, the error ID obtaining unit 120, the software log obtaining unit 122, and the software log storing unit 124 are modules.

The hardware log monitoring unit 118 monitors whether or not a hardware log has been newly stored in the hardware log storage region 116 by the hardware error detail log storing unit 114. If a hardware log has been newly stored in the hardware log storage region 116, the software log obtaining unit 122 obtains a software log of the OS or application. After the hardware log has been newly stored in the hardware log storage region 116, the error ID obtaining unit 120 obtains an error ID from the hardware log, and assigns the obtained error ID to the software log. The software log storing unit 124 stores the software log in the software log storage region 126.

The following method may be used as another method for assigning an error ID to a software log by the error ID obtaining unit 120. For example, at the time when a hardware error is detected, an error ID may be assigned to all the software logs that have been obtained by the software log obtaining unit 122. Also, for example, at the time when a hardware error is detected, an error ID may be assigned to a software log to which an error ID has not been assigned.

The information support system 131 obtains error information stored in the error information storage unit 128 in the system monitoring component 127 and distribution information about the types of errors stored in the error statistical information storage unit 130. Also, the information support system 131 obtains a hardware log stored in the hardware log storage region 116 in the HDD 115 and a software log stored in the software log storage region 126. A server manager is capable of analyzing a fault of the information processing apparatus 100 with reference to the information obtained by the information support system 131.

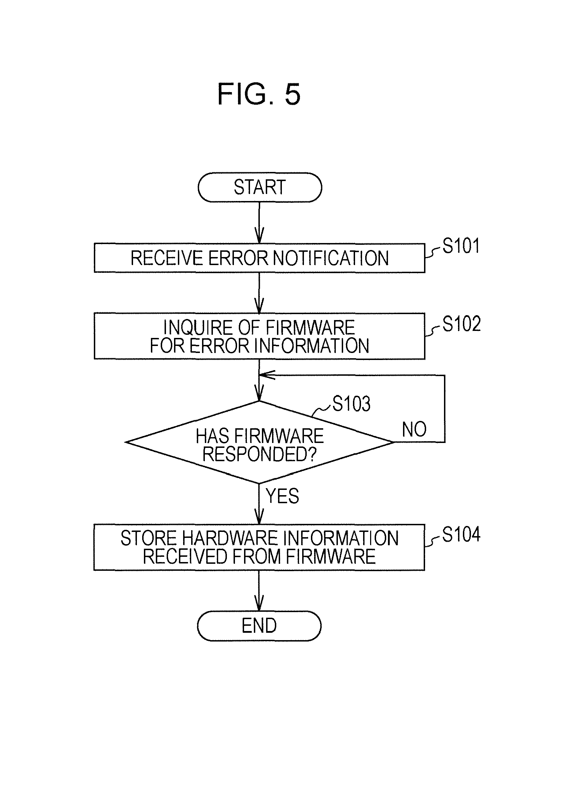

FIG. 5 illustrates a flowchart of a process of the error interrupt handler according to an embodiment. In step S101, the error interrupt handler 103 receives an error notification from the error detector 102. The process proceeds to step S102.

In step S102, the error interrupt handler 103 inquires of the firmware 105 for error information. The process proceeds to step S103.

In step S103, the error interrupt handler 103 waits for a response from the firmware 105. If a response from the firmware has been received, the process proceeds to step S104.

In step S104, the error interrupt handler 103 stores the error information obtained from the firmware 105 in the HDD 115. The process ends.

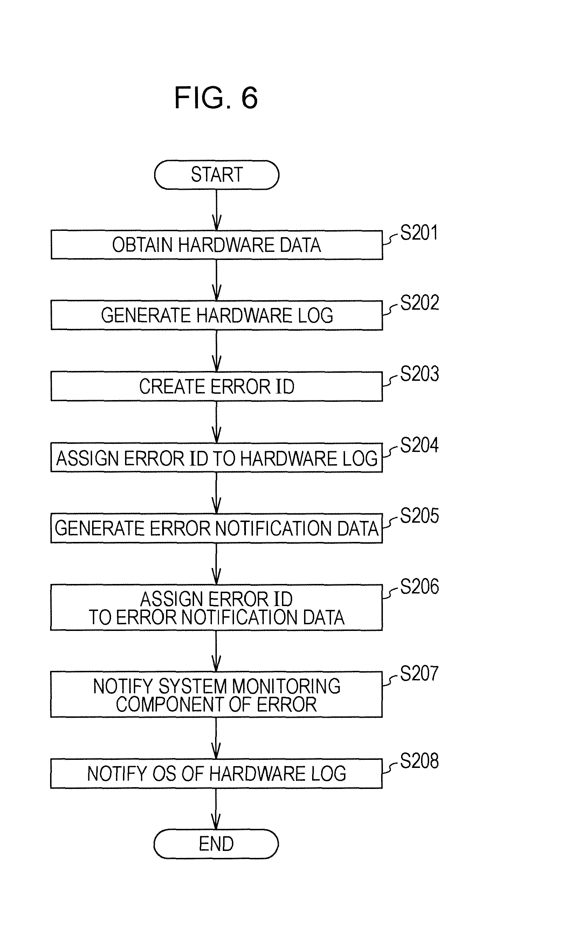

FIG. 6 illustrates a flowchart of a firmware fault process according to an embodiment. In step S201, the hardware log obtaining unit 106 obtains hardware data. The hardware data is register information for analyzing an error. The process proceeds to step S202.

In step S202, the hardware log obtaining unit 106 generates a hardware log from the hardware data obtained in step S201. The process proceeds to step S203.

In step S203, the error ID creating unit 108 creates an error ID. The process proceeds to step S204.

In step S204, the error ID creating unit 108 assigns the error ID created in step S203 to the hardware log generated in step S202. Th process proceeds to step S205.

In step S205, the fault notifying unit 110 generates error notification data. The process proceeds to step S206.

In step S206, the fault notifying unit 110 assigns the error ID to the error notification data generated in step S205. The process proceeds to step S207.

In step S207, the fault notifying unit 110 notifies the system monitoring component 127 of the error. The process proceeds to step S208.

In step S208, the hardware log notifying unit 112 notifies the OS 119 of the hardware log. The process ends.

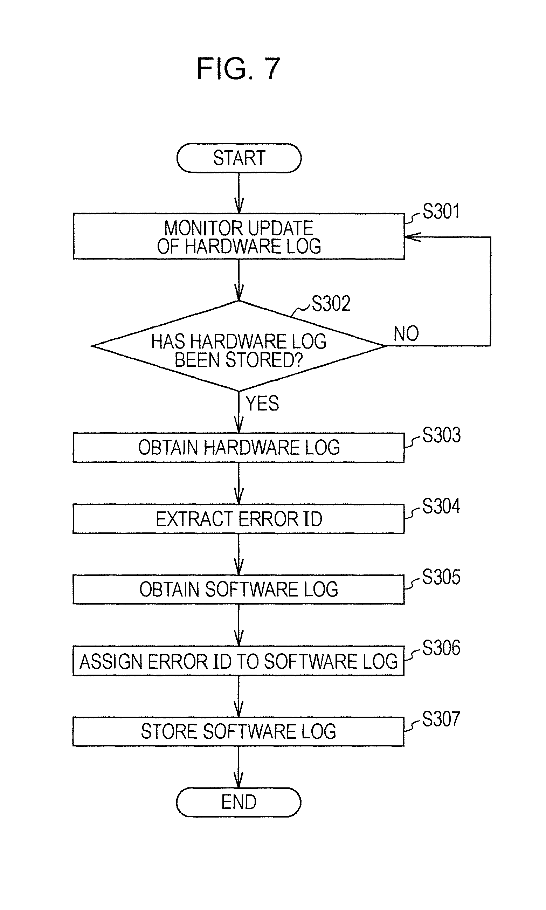

FIG. 7 illustrates a flowchart of an error monitoring program according to an embodiment. In step S301, the hardware log monitoring unit 118 monitors update of a hardware log. The process proceeds to step S302.

In step S302, the hardware log monitoring unit 118 determines whether or not a hardware log has been newly stored in the hardware log storage region 116 by the hardware error detail log storing unit 114. If a hardware log has been newly stored in the hardware log storage region 116 by the hardware error detail log storing unit 114 (YES in S302), the process proceeds to step S303. On the other hand, if a hardware log has not been newly stored in the hardware log storage region 116 by the hardware error detail log storing unit 114 (NO in S302), the process returns to step S301.

In step S303, the error ID obtaining unit 120 obtains the hardware log. The process proceeds to step S304.

In step S304, the error ID obtaining unit 120 extracts an error ID from the hardware log. The process proceeds to step S305.

In step S305, the software log obtaining unit 122 obtains a software log. The process proceeds to step S306.

In step S306, the error ID creating unit 108 assigns the error ID to the software log. The process proceeds to step S307.

In step 307, the software log storing unit 124 stores, in the software log storage region 126, the software log to which the error ID has been assigned. The process ends.

In the above-described manner, the firmware assigns an error ID that is obtained for each fault to a hardware log, and the error monitoring program manages a software log using the error ID when collecting the software log. Thus, the hardware log and software log can be stored by automatically associating a hardware error and log information about software with each other by using the error ID without manual operations. Therefore, in the above-described fault information collecting system, a series of operations of obtaining a hardware log, obtaining an error ID, and obtaining a software log are realized for one fault even if many faults occur in a short time, and logs can be managed in units of faults. Furthermore, even if hardware faults sequentially occur, logs for the individual faults can be obtained.

The firmware obtains a hardware log, obtains an error ID, and then notifies the system monitoring component 127 that an error has occurred, thereby being able to notify the fault support system 131. At this time, the error ID may be assigned to the data transmitted to the system monitoring component 127, thereby being able to manage a log together with fault information supplied to the fault support system 131 using the error ID.

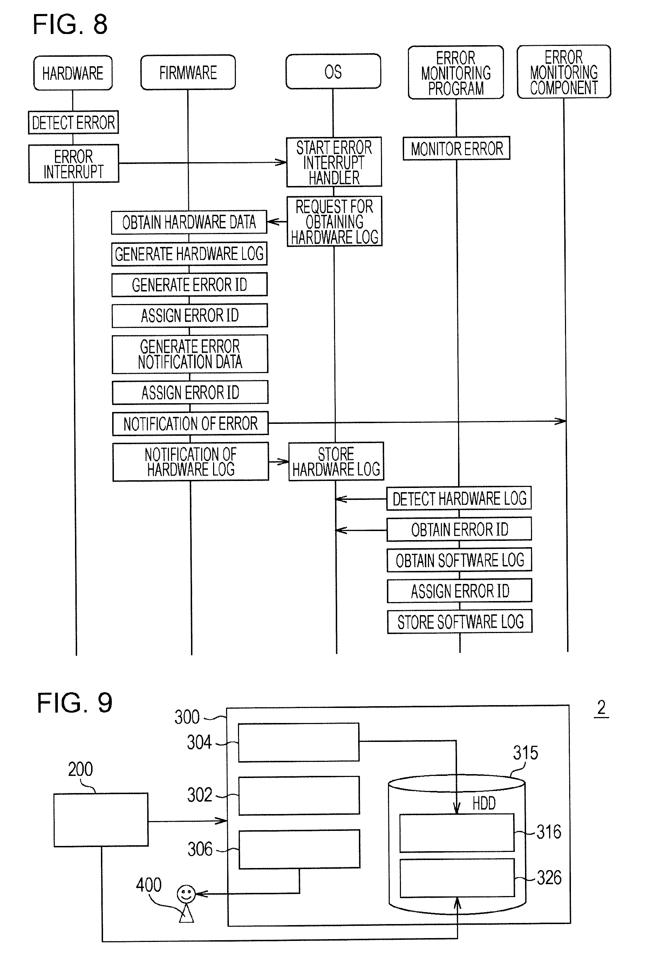

A sequence diagram collectively illustrating the foregoing flowcharts is illustrated in FIG. 8.

The usefulness of this embodiment will be described. For example, the fault information collecting system 2 illustrated in FIG. 9 will be discussed. If a hardware fault occurs in an information processing apparatus 200, a server monitoring system 300 receives a hardware log from the information processing apparatus 200. An error ID assigning unit 302 assigns an error ID to the hardware log received from the information processing apparatus 200. A hardware log storing unit 304 stores, in a hardware log storage region 316, the hardware log to which the error ID has been assigned. A fault/error ID notifying unit 306 notifies a server manager 400 that the hardware error has occurred and of the error ID assigned to the hardware log. When receiving the notification from the fault/error ID notifying unit 306, the server manager 400 obtains the software log of the OS or application of the information processing apparatus 200. Then, at the time of storing the obtained software log in a software log storage region 326, the server manager 400 uses the error ID assigned to the hardware log as a key code for update, thereby collectively managing the individual logs in the server monitoring system.

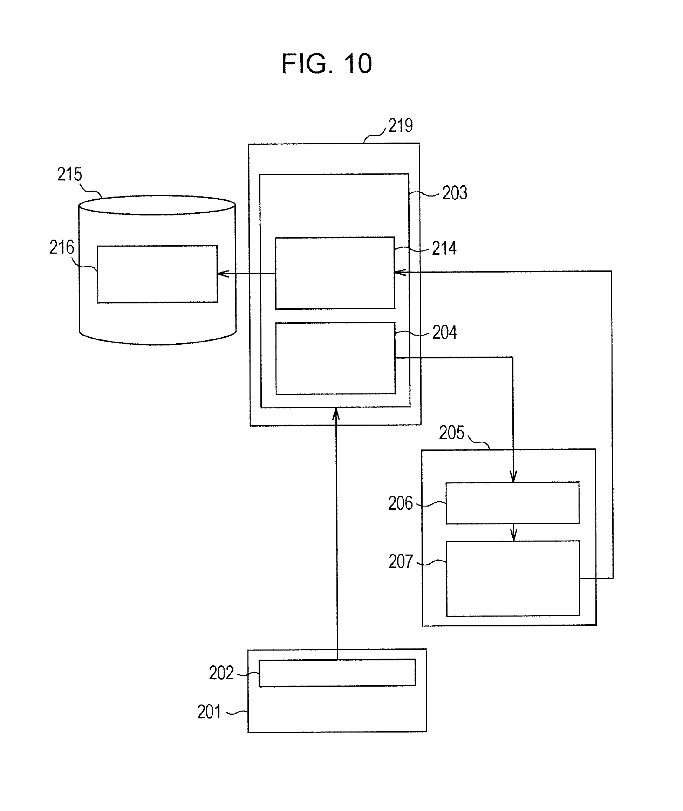

Also, for example, the fault information collecting system 4 illustrated in FIG. 10 will be discussed. An error detector 202 detects a hardware error in hardware 201. After the error detector 202 has detected a hardware error, the process shifts to an error interrupt handler 203 in an OS 219. A hardware error detail log inquiry unit 204 inquires of a hardware log obtaining unit 206 for a hardware log. The hardware log obtaining unit 206 transmits an obtained hardware log to a hardware receiving and transmitting unit 207. The hardware receiving and transmitting unit 207 transmits the received hardware log to a hardware error detail log storing unit 214. The hardware error detail log storing unit 214 stores the received hardware log in a hardware log storage region.

In the fault information collecting system 2 illustrated in FIG. 9, a hardware log and a software log are not automatically associated with each other, and thus the server manager is likely to cause an operation error. Furthermore, there is a time lag between collection of a hardware log and collection of a software log, and it is necessary to take the time lag into consideration in order to analyze the software log when a fault occurs. In a state where a log is densely recorded, the time point in the log where an error occurred cannot be determined. Furthermore, if faults sequentially occur in a short time, hardware logs transferred to the server monitoring system and software logs obtained by the server manager are not associated with each other in one-to-one relationship, and a plurality of hardware logs exist for one software log. Such a phenomenon causes referring to the individual logs to be difficult, causes a mistake in referring to a log, and causes the server manager to wrongly analyze a fault.

In the fault information collecting system 4 illustrated in FIG. 10, a mechanism of obtaining a software log when a fault occurs is not provided. Thus, when a fault analyzer requires a software log, he/she needs to request the server manager to obtain the software log. Also, an error ID is not obtained when a fault occurs, and thus fault management cannot automatically be performed.

In contrast, according to this embodiment, a hardware log and a software log can be collectively managed using an error ID. Also, according to this embodiment, a hardware log and a software log are automatically obtained without a time lag and without manual operations, and thus a comparison error in the individual logs can be overcome. Also, according to this embodiment, a software log is automatically obtained. Accordingly, forgetting to obtain a log does not occur, and it can be suppressed that the software log obtained when a fault occurs is overwritten and cannot be analyzed.

Also, for example, if a timer used to obtain a hardware log and a timer used to obtain a software log are not in synchronization with each other, the server manager needs to associate the hardware log with the software log by taking a time lag into consideration even if the server manager refers to time information about the logs stored in the hardware log storage region 116 and the software log storage region 126. In contrast, according to this embodiment, an error ID is assigned to a software error at the time when a hardware error is detected. Thus, even if the timers are not in synchronization with each other, a software log corresponding to a certain hardware log can be specified by referring to the error

### ID.

### Reference Signs List

- 0, 2, and 4: fault information collecting system
- 100 and 200: information processing apparatus
- 101 and 201: hardware
- 102 and 202: error detector
- 103 and 203: error interrupt handler
- 104 and 204: hardware error detail log inquiry unit
- 105 and 205: firmware
- 106 and 206: hardware log obtaining unit
- 108: error ID creating unit
- 110: fault notifying unit
- 112: hardware log notifying unit
- 113: error log storage region
- 114 and 214: hardware error detail log storing unit
- 115 and 215: HDD
- 116, 216, and 316: hardware log storage region
- 117: error monitoring program
- 118: hardware log monitoring unit
- 119 and 219: OS
- 120: error ID obtaining unit
- 122: software log obtaining unit
- 124: software log storing unit
- 126 and 326: software log storage region
- 127: system monitoring component
- 128: error information storage unit
- 130: error statistical information storage unit
- 131: information support system
- 207: hardware receiving and transmitting unit
- 300: server monitoring system
- 302: error ID assigning unit
- 306: fault/error ID notifying unit
- 400: server manager
- 500: hardware log
- 502: error type
- 504: error intensity
- 506: error positional information
- 508: error portion register dump
- 600: error ID
- 602: error occurrence time
- 604: MAC address
- 700: software log
- 702: event occurrence time
- 704: event log
- 800: CPU

## Claims

1. A method for controlling an information processing apparatus including a processor and a plurality of hardware units, the method comprising:
detecting, with the processor, an abnormal state of a hardware unit among the plurality of hardware units in the information processing apparatus;
obtaining identification information of the hardware unit having abnormality;
generating abnormality identification information on the basis of the identification information;
recording a log of an execution process executed by the processor;
assigning the abnormality identification information to the log of the execution process recorded at a time when the abnormal state of the hardware unit is detected; and
outputting the log of the execution process to which the abnormality identification information has been assigned.

2. The method for controlling an information processing apparatus according to Claim 1, wherein the abnormality identification information is generated on the basis of the identification information and time information about the time when the abnormal state is detected.

3. The method for controlling an information processing apparatus according to Claim 1, wherein the abnormality identification information is assigned to a log of an execution process to which the abnormality identification information has not been assigned when the abnormal state of the hardware unit is detected.

4. An information processing apparatus including a processor and a plurality of hardware units, the information processing apparatus comprising:
a detecting unit that detects an abnormal state of a hardware unit among the plurality of hardware units in the information processing apparatus;
an obtaining unit that obtains identification information of the hardware unit having abnormality;
a generating unit that generates abnormality identification information on the basis of the identification information;
a storage unit that stores a log of an execution process executed by the processor; and
an assigning unit that assigns the abnormality identification information to the log of the execution process stored in the storage unit at a time when the detecting unit detects the abnormal state of the hardware unit.

5. The information processing apparatus according to Claim 4, wherein the generating unit generates the abnormality identification information on the basis of the identification information and time information about the time when the abnormal state is detected.

6. The information processing apparatus according to Claim 4, wherein the assigning unit assigns the abnormality identification information to a log of an execution process to which the abnormality identification information has not been assigned when the abnormal state of the hardware unit is detected.
